# DEMANDE DE BREVET EUROPEEN

(11) **EP 1 125 493 A1**
(43) Date de publication de la demande: **22.08.2001**
(21) Numéro de dépôt: 01400391.7
(22) Date de dépôt: 14.02.2001
(51) Int. Cl.: A01J 25/06

(54) **Procédé et installation pour trancher du caillé dans une cuve cylindrique**

(30) Priorité: 15.02.2000 FR 0001838
(71) Demandeur: Societe d'Etude, Réalisaiton et Vente à l'Industrie SERVI, 37130 Langeais (FR)
(72) Inventeur: Helaine, Christian, 37130 Cinq Mars La Pile (FR); Papot, Daniel, 37130 Langeais (FR)
(74) Mandataire: Lemoine, Robert

(57) **Abrégé**

Le procédé de tranchage selon l'invention comprend une étape de tranchage hélicoïdal consistant à réaliser dans le caillé un tranchage hélicoïdal descendant (8) pratiqué dans un sens jusqu'au fond (3) de la cuve (1), puis un tranchage hélicoïdal ascendant (9) pratiqué dans le sens opposé, les tranchages ascendant et descendant ne se croisant pas.

Quant à l'installation, elle comprend un support (4) s'étendant au-dessus de la cuve (1), un couteau (6) fixé à l'extrémité libre d'une tige (5) suspendue au support, coaxialement avec la cuve, et des moyens de commande (7) pour communiquer au couteau un mouvement hélicoïdal, dans un sens ou dans l'autre, jusqu'au fond de la cuve, le couteau s'avançant jusqu'à la surface interne de la paroi latérale (2) de la cuve lorsqu'il est dans cette dernière.

## Description

La présente invention concerne un procédé pour trancher une masse de caillé contenue dans une cuve cylindrique comportant une paroi latérale et un fond.

Dans la fabrication de nombreux fromages, le caillé est tranché en fin de coagulation afin de permettre une élimination rapide et uniforme d'une grande partie du sérum qu'il contient.

Le tranchage peut influencer la qualité des fromages produits et doit être réalisé avec le plus grand soin.

Son exécution nécessite cependant un matériel relativement complexe et coûteux et dont l'utilisation demande du temps et une main d'oeuvre souvent qualifiée.

La présente invention se propose plus particulièrement de remédier à ces inconvénients et, pour ce faire, elle a pour objet un procédé pour trancher une masse de caillé contenue dans une cuve cylindrique comportant une paroi latérale et un fond, ce procédé étant caractérisé en ce qu'il consiste à réaliser dans la masse de caillé un tranchage hélicoïdal descendant pratiqué dans un sens jusqu'au fond de la cuve pour former une première ligne de coupe hélicoïdale, puis un tranchage hélicoïdal ascendant pratiqué dans le sens opposé à partir du fond de la cuve pour former une deuxième ligne de coupe hélicoïdale, les extrémités des tranchages ascendant et descendant situées au niveau du fond étant décalées angulairement pour que les lignes de coupe ne se croisent pas.

Les tranchages hélicoïdaux descendant et ascendant sont réalisables rapidement et un intervalle de temps très court peut être prévu entre leur réalisation. La durée de l'étape de tranchage hélicoïdal peut par conséquent être très courte.

Par ailleurs, comme les lignes de coupe ne se croisent pas, l'outil de tranchage utilisé ne risque pas de former des fines susceptibles d'être entraînées avec le sérum et de provoquer par conséquent des pertes de caillé.

De préférence, les première et deuxième lignes de coupe ont sensiblement le même pas et ne risquent donc pas de se croiser dans la masse de caillé.

Il est par ailleurs souhaitable que les spires de l'une des lignes de coupe soient sensiblement équidistantes de celles de l'autre ligne de coupe afin que le caillé puisse être tranché en deux éléments hélicoïdaux superposés ayant sensiblement la même épaisseur.

Le procédé selon l'invention peut par ailleurs comprendre deux étapes de tranchage vertical consistant à réaliser dans la masse de caillé deux séries de lignes de coupe verticales, parallèles et équidistantes, les lignes de coupe verticales d'une série étant perpendiculaires à celles de l'autre série.

Lorsque les étapes de tranchage hélicoïdal et de tranchage vertical sont exécutées, le caillé est découpé en morceaux qui ne sont pas de véritables cubes.

Or, cette particularité est très avantageuse car elle permet aux morceaux de se déplacer plus facilement les uns par rapport aux autres lorsque la cuve qui les contient est inclinée pour permettre leur transfert dans un moule ou tout autre récipient.

Les morceaux résultants peuvent donc sortir de la cuve plus facilement que des morceaux cubiques qui ont tendance à s'arc-bouter les uns contre les autres et à sortir par à-coups en blocs de taille plus ou moins importante.

La présente invention concerne également une installation mettant en oeuvre le procédé de tranchage présenté ci dessus, cette installation étant caractérisée en ce qu'elle comprend un support s'étendant au-dessus de la cuve, un couteau fixé à l'extrémité libre d'une tige suspendue au support, coaxialement avec la cuve, et des moyens de commande pour communiquer au couteau un mouvement hélicoïdal, dans un sens ou dans l'autre, jusqu'au fond de la cuve, le couteau s'avançant jusqu'à la surface interne de la paroi latérale de la cuve lorsqu'il est dans cette dernière.

On précisera ici que le couteau de cette installation comporte une arête tranchante sur chacun de ses bords avant et arrière afin de pouvoir trancher convenablement le caillé quel que soit son sens de rotation.

Etant situé à l'extérieur de la cuve avant et après la réalisation des tranchages hélicoïdaux, le couteau peut être utilisé pour effectuer des tranchages de caillé successifs dans plusieurs cuves identiques placées côte à côte.

On notera ici que les cuves peuvent être de petite taille de façon à ne contenir que la quantité de caillé nécessaire à la fabrication d'un seul fromage.

L'installation selon l'invention peut par ailleurs comporter un deuxième support s'étendant au-dessus de la cuve, un outil de tranchage vertical suspendu au deuxième support, des premiers moyens de commande pour déplacer cet outil verticalement entre une position haute extrême dans laquelle il est au-dessus de la cuve et une position basse extrême dans laquelle il s'avance jusqu'au fond de ladite cuve, et des deuxièmes moyens pour faire tourner de 90° l'outil de tranchage vertical ou la cuve.

Après l'exécution des deux tranchages verticaux décalés de 90° l'un par rapport à l'autre, le caillé est divisé en morceaux dont la forme n'est pas exactement celle d'un cube et qui peuvent se déplacer facilement les uns par rapport aux autres lorsque la cuve qui les contient est basculée pour être vidée.

De préférence, l'outil de tranchage vertical comprend des lames verticales, parallèles et équidistantes, ces lames s'avançant jusqu'à la face interne de la paroi latérale de la cuve lorsque l'outil est au moins en partie dans cette dernière.

Le caillé peut donc être tranché verticalement en tout endroit à l'intérieur de la cuve.

Un mode de mise en oeuvre du procédé de tranchage selon l'invention sera décrit ci-après à titre d'exemple nullement limitatif en référence aux dessins annexés dans lesquels :
- la figure 1 est une vue en coupe verticale, schématique et partielle, d'une installation de tranchage conforme à l'invention, montrant l'outil de tranchage hélicoïdal en position haute au-dessus du caillé contenu dans une cuve cylindrique ;
- la figure 2 est une vue en coupe analogue à la figure 1, mais montrant l'outil de tranchage hélicoïdal contre le fond de la cuve ;
- la figure 3 est une vue analogue à la figure 1, mais montrant l'outil de tranchage hélicoïdal après son retour dans sa position haute ;
- la figure 4 est une vue en coupe schématique selon la ligne IV-IV de la figure 2 ;
- la figure 5 est une vue en coupe verticale, schématique et partielle, de l'installation de tranchage conforme à l'invention, montrant l'outil de tranchage vertical en position haute, au-dessus du caillé tranché de manière hélicoïdale ; et
- la figure 6 est une vue en perspective schématique de l'outil de tranchage vertical.

L'installation que l'on peut voir sur les dessins est conçue pour trancher du caillé contenu dans une rangée de cuves cylindriques 1 disposées les unes à la suite des autres sous la forme d'un ensemble unitaire.

Les cuves 1 sont identiques et chacune d'elles comporte une paroi latérale 2 et un fond 3.

L'installation comprend un support horizontal 4 s'étendant au-dessus des cuves.

Des tiges faisant saillie sur la face inférieure du support 4 s'étendent coaxialement avec les cuves 1 et portent chacune un couteau 6 à leur extrémité libre.

Par ailleurs, des moyens de commande conventionnels 7 installés sur la face supérieure du support 4 sont prévus pour communiquer un mouvement hélicoïdal aux couteaux 6, soit dans un sens, soit dans l'autre.

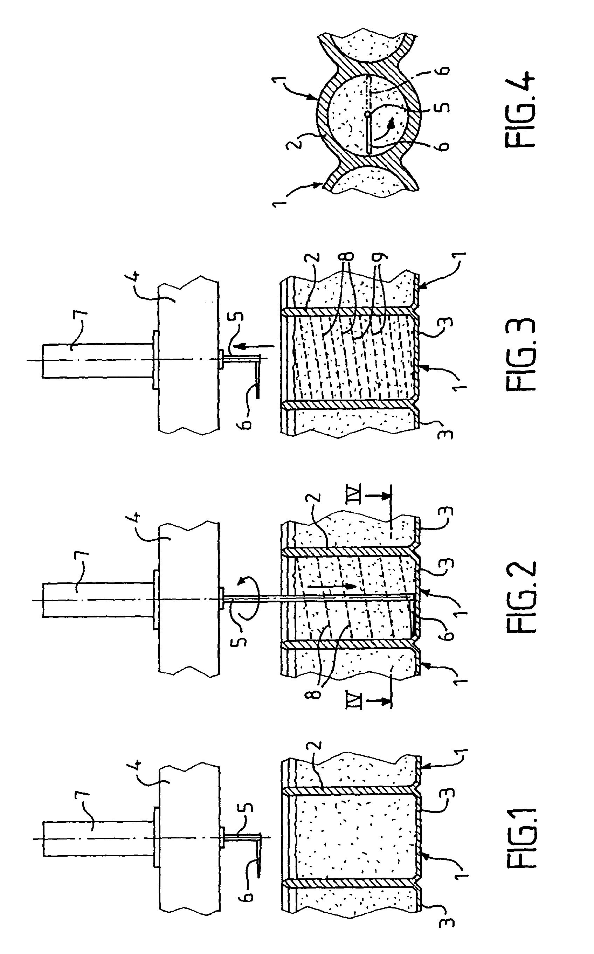

Grâce aux moyens de commande 7, les couteaux 6 sont déplaçables entre une position haute extrême dans laquelle ils s'étendent au-dessus du caillé contenu dans les cuves correspondantes, comme représenté sur les figures 1 et 3, et une position basse extrême dans laquelle ils sont en contact avec le fond 3 des cuves, comme représenté sur la figure 2.

On notera ici que les couteaux 6 sont constitués par des lames sensiblement horizontales s'avançant pratiquement jusqu'à la paroi latérale des cuves 1 lorsqu'elles sont dans ces dernières, et qu'ils comportent une arête tranchante sur chacun de leurs avant et arrière.

Les couteaux 6 permettent de réaliser dans les masses de caillé contenues dans les cuves 1, d'abord un tranchage hélicoïdal descendant, puis un tranchage hélicoïdal ascendant.

Ces deux tranchages sont réalisés comme suit.

Tout d'abord, on place les cuves 1 remplies de caillé sous le support 4 en faisant en sorte que les tiges 5 s'étendent coaxialement avec elles et que les couteaux 6 soient dans leur position haute extrême, comme représenté sur la figure 1.

On actionne ensuite les moyens de commande 7 pour qu'ils communiquent un mouvement hélicoïdal descendant aux couteaux 6, jusqu'à ce que ces derniers parviennent contre le fond 3 des cuves, comme représenté sur la figure 2.

Pendant leur mouvement de descente, les couteaux 6 réalisent une première ligne de coupe hélicoïdale 8.

Une fois la ligne de coupe hélicoïdale 8 réalisée, on fait tourner les tiges 5 de 180° en maintenant les couteaux 6 contre le fond des cuves, les couteaux passant alors de la position en trait continu à la position en traits mixtes illustrées sur la figure 4.

Pendant cette rotation, le caillé situé au contact de la partie du fond des cuves qui est balayée par les couteaux 6 est tranché et donc détaché de cette partie.

On actionne ensuite les moyens de commande 7 en sens inverse pour qu'ils communiquent un mouvement hélicoïdal ascendant aux couteaux 6 jusqu'à ce que ces derniers sortent des cuves 1, comme représenté sur la figure 3.

Pendant leur mouvement de remontée, les couteaux 6 réalisent une seconde ligne de coupe hélicoïdale 9 dont le pas est le même que celui de la première ligne de coupe 8 et qui ne croise pas cette dernière.

Le caillé contenu dans les différentes cuves est donc maintenant tranché en deux éléments hélicoïdaux superposés ayant sensiblement la même épaisseur.

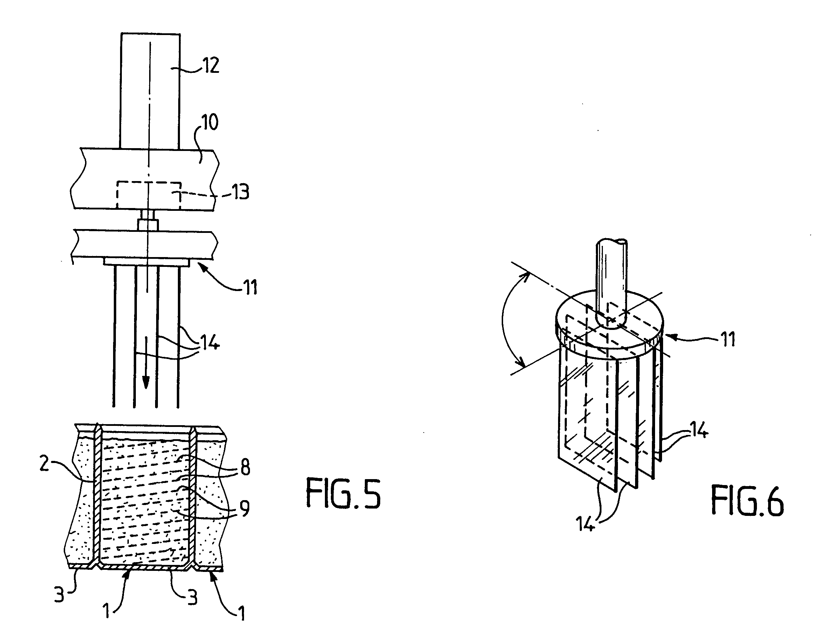

L'installation de tranchage qui a été décrite en référence aux figures 1 à 4 comprend par ailleurs un deuxième support horizontal 10 pouvant être amené au-dessus des cuves 1, des outils de tranchage vertical 11 faisant saillie sur la face inférieure du deuxième support 10, des premiers moyens de commande 12 pour déplacer les outils 11 verticalement entre une position haute extrême dans laquelle ils sont au-dessus de la cuve, comme représenté sur la figure 5, et une position basse extrême dans laquelle ils s'avancent jusqu'au fond des cuves, et des deuxièmes moyens de commande 13 pour faire tourner les outils de tranchage 11 de 90° lorsque ces derniers sont hors des cuves.

En se référant à la figure 6, on remarquera par ailleurs que les outils de tranchage 11 comprennent des lames verticales 14 parallèles et équidistantes.

Ces lames sont dimensionnées pour venir pratiquement en contact avec la face interne de la paroi latérale 2 des cuves correspondantes, lorsque les outils 11 sont au moins en partie dans ces dernières.

Ainsi, les masses de caillé contenues dans les cuves peuvent être tranchées verticalement dans leur totalité.

On précisera enfin que les lames 14 ont une hauteur légèrement supérieure à la profondeur des cuves, de sorte qu'elles traversent de part en part les masses de caillé lorsque les outils 11 sont dans leur position basse extrême.

Ces outils de tranchage vertical sont utilisés comme suit :

Tout d'abord, on place les cuves 1 contenant le caillé tranché selon les lignes de coupe hélicoïdales 8 et 9 sous le deuxième support 10 de telle sorte que les lames 14 des outils de tranchage vertical 11 surplombent le fond 3 desdites cuves.

On actionne ensuite les premiers moyens de commande 12 pour qu'ils déplacent les outils 11 de leur position haute extrême à leur position basse extrême et permettent aux lames 14 de réaliser un premier tranchage vertical.

Ce premier tranchage étant réalisé, on actionne les premiers moyens de commande 12 en sens inverse afin de ramener les outils 11 dans leur position haute extrême.

Lorsque les lames 14 sont hors du caillé contenu dans les cuves, on actionne les deuxièmes moyens de commande 13 afin de faire tourner les outils 11 de 90°.

On actionne ensuite les premiers moyens de commande 12 pour qu'ils déplacent à nouveau les outils 11 de leur position haute extrême à leur position basse extrême et permettent aux lames 14 de réaliser un deuxième tranchage vertical perpendiculaire au premier.

Enfin, on actionne les premiers moyens de commande 12 en sens inverse afin de ramener les outils 11 dans leur position haute extrême.

Le caillé contenu dans les cuves 1 est maintenant découpé en petits morceaux qui, n'étant pas de véritables cubes, peuvent se déplacer très facilement les uns par rapport aux autres lors de leur transfert dans un autre récipient, par exemple un moule à fromage.

L'installation qui vient d'être décrite peut maintenant être utilisée pour trancher le caillé contenu dans une autre série de cuves.

Il va de soi que l'on ne sortirait pas du cadre de la présente invention si cette installation ne comportait qu'un seul outil de tranchage hélicoïdal 6 et un seul outil de tranchage vertical 11 ou si au contraire elle comportait plusieurs outils 6 et plusieurs outils 11 disposés respectivement en lignes et en colonnes.

Dans le dernier mode de réalisation, les cuves pourraient avantageusement être dimensionnées pour contenir la quantité de caillé strictement nécessaire à la production d'un seul fromage. De telles cuves sont généralement désignées par "micro-bassines".

Pour être complet, on précisera que les outils de tranchage hélicoïdal 6 pourraient comporter non pas une seule lame, comme représenté sur les figures 1 à 4, mais deux lames disposées de part et d'autre des tiges 5, dans le prolongement l'une de l'autre.

Dans ce cas, il suffirait de faire tourner les couteaux 6 de 90°, et non pas 180°, pour éviter que les lignes de coupe hélicoïdales descendante et ascendante se croisent dans le caillé.

On précisera enfin que des moyens non représentés peuvent être prévus pour déplacer horizontalement les supports 4 et 10 ou les cuves 1 afin d'amener les outils de tranchage 5 et 11 dans les positions adéquates par rapport aux cuves.

## Revendications

1. Procédé pour trancher une masse de caillé contenue dans une cuve cylindrique (1) comportant une paroi latérale (2) et un fond (3), caractérisé en ce qu'il comprend une étape de tranchage hélicoïdal consistant à réaliser dans la masse de caillé un tranchage hélicoïdal descendant pratiqué dans un sens jusqu'au fond (3) de la cuve (1) pour former une première ligne de coupe hélicoïdale (8), puis un tranchage hélicoïdal ascendant pratiqué dans le sens opposé à partir du fond (3) pour former une deuxième ligne de coupe hélicoïdale (9), les extrémités des tranchages ascendant et descendant situées au niveau du fond étant décalées angulairement pour que les lignes de coupe ne se croisent pas.

2. Procédé selon la revendication 1, caractérisé en ce que les première et deuxième lignes de coupe ont sensiblement le même pas.

3. Procédé selon la revendication 1 ou 2, caractérisé en ce que les spires de l'une des lignes de coupe sont sensiblement équidistantes de celles de l'autre ligne de coupe.

4. Procédé selon l'une quelconque des revendications précédentes, caractérisé en ce qu'il comprend en outre deux étapes de tranchage vertical consistant à réaliser dans la masse de caillé deux séries de lignes de coupe verticales, parallèles et équidistantes, les lignes de coupe verticales d'une série étant perpendiculaires à celles de l'autre série.

5. Installation pour la mise en oeuvre du procédé selon l'une quelconque des revendications 1 à 3, caractérisée en ce qu'elle comprend un support (4) s'étendant au-dessus de la cuve (1), un couteau (6) fixé à l'extrémité libre d'une tige (5) suspendue au support, coaxialement avec la cuve, et des moyens de commande (7) pour communiquer au couteau un mouvement hélicoïdal, dans un sens ou dans l'autre, jusqu'au fond de la cuve, le couteau s'avançant jusqu'à la surface interne de la paroi latérale (2) de la cuve lorsqu'il est dans cette dernière.

6. Installation selon la revendication 5, caractérisée en ce qu'elle comprend en outre un deuxième support (10) s'étendant au-dessus de la cuve (1), un outil de tranchage vertical (11) suspendu au deuxième support, des premiers moyens de commande (12) pour déplacer cet outil verticalement entre une position haute extrême dans laquelle il est au-dessus de la cuve (1) et une position basse extrême dans laquelle il s'avance jusqu'au fond (3) de ladite cuve, et des deuxièmes moyens (13) pour faire tourner de 90° l'outil de tranchage vertical ou la cuve.

7. Installation selon la revendication 6, caractérisée en ce que l'outil de tranchage vertical (11) comprend des lames verticales (14), parallèles et équidistantes, ces lames s'avançant jusqu'à la face interne de la paroi latérale (2) de la cuve (1) lorsque l'outil (11) est au moins en partie dans cette dernière.
